# EUROPEAN PATENT SPECIFICATION

(11) **EP 2 267 241 B1**
(45) Date of publication and mention of the grant of the patent: **26.11.2014**
(21) Application number: 10425199.6
(22) Date of filing: 15.06.2010
(51) Int. Cl.: E04F 15/04, F16B 2/04, F16B 2/18, E04F 17/00

(54) **A system for laying outdoor and indoor wood floors capable of being thoroughly overseen**
System zum Verlegen von Holzböden im Aussen- und Innenbereich, geeignet für stringenten Kontrolle
Système pour poser des planchers de bois en intérieur et en extérieur capable d'un contrôle strict

(30) Priority: 25.06.2009 IT NA20090041
(43) Date of publication of application: 29.12.2010
(73) Proprietor: Iovene, Giovanni, 81030 Castel Volturno (CE) (IT)
(72) Inventor: Iovene, Giovanni, 81030 Castel Volturno (CE) (IT)
(74) Representative: Cirillo, Gennaro

(56) References cited:
- EP-A1- 1 990 549
- WO-A1-2008/000747
- WO-A1-2008/093383
- DE-U1- 29 707 884
- US-A- 5 135 415
- US-A1- 2002 172 552

## Description

Systems for lying wood floors are known and widely spread. They essentially consist of suitably spaced apart wood frames to which the parquet boards are screwed or in any way secured.

Patent WO2008/000747 is known, which locks and releases the boards by the rotation of a throttle not able to lock both ends of the board, for this reason it is necessary to place a locking throttle at one end and at the other.

Such systems have the drawback of being extremely laboured and time-consuming. Should one or more boards be replaced, a wide area of parquet has to be dismantled by removing the fastening screws or nails with the obvious results especially if the flooring has been laid for some time.

Another drawback of the known lying systems is that the background of the parquet flooring cannot be overseen.

These and other drawbacks are overcome by the system of the present invention.

It is based upon the use of a particular support on which the suitably shaped boards can be easily and efficiently secured after their laying.

This solution can be better understood referring to the following disclosure and the accompanying drawings of an exemplary, not limiting embodiment. In the drawings:

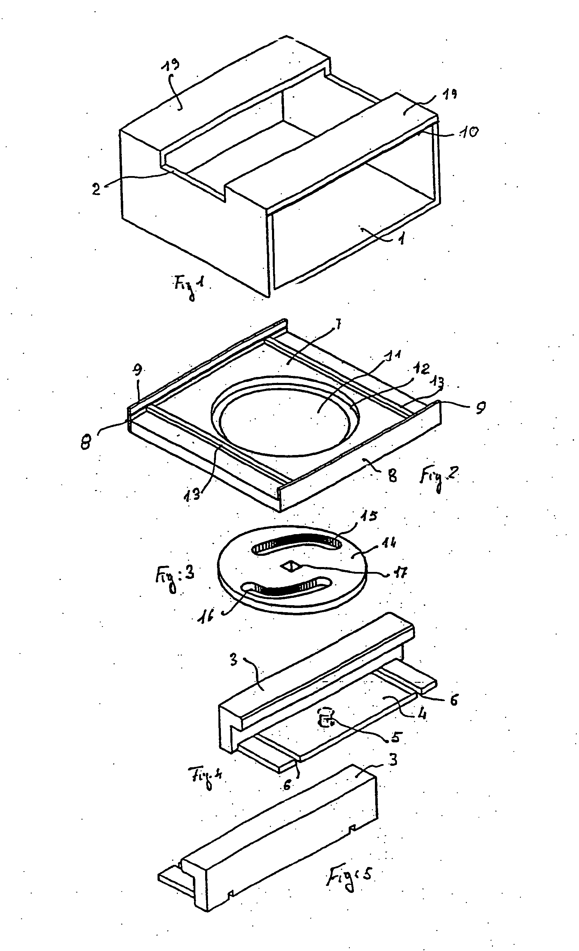

Figs. 1, 2, 3, 4 and 5 of sheet 1/9 show the components of the support.

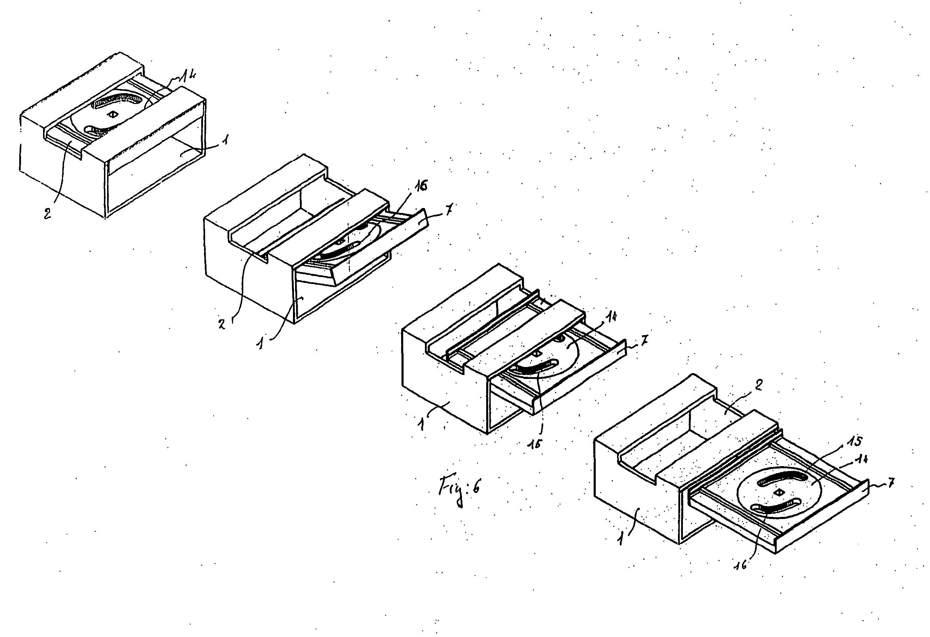

Fig. 6 of sheet 2/9 shows the same support assembled with a plate provided with a central hole having a circumferential shoulder on which a disc is laid down.

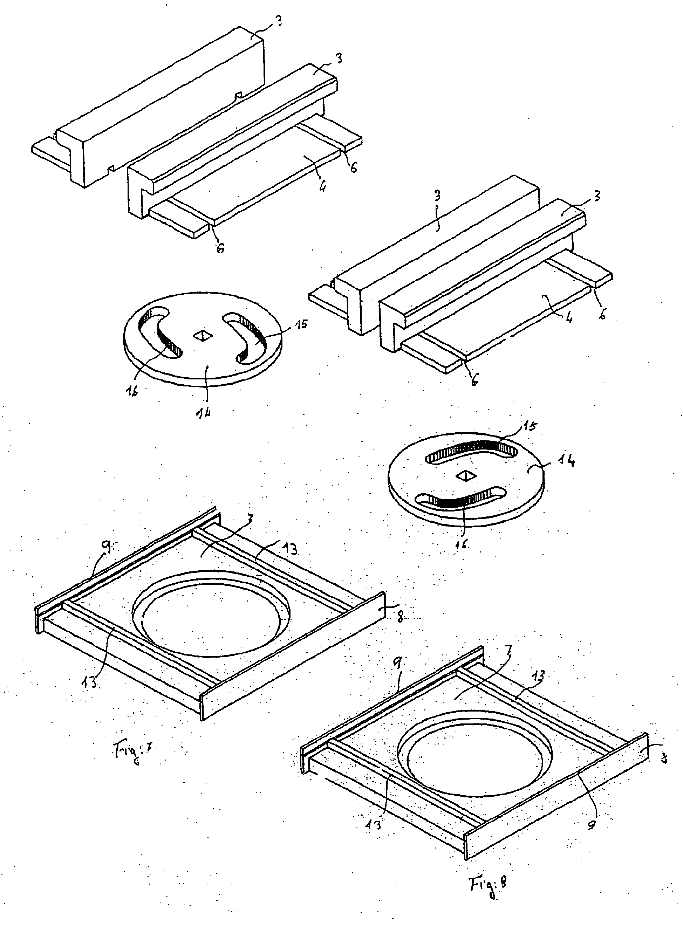

Figs. 7 and 8 of sheet 3/9 show an exploded view of plate, disc and slides in closed and opened positions, respectively, which are capable of sliding along the plate and driven by a suitable disc provided with elliptical slots.
Figs. 9 and 10 of sheet 4/9 show one of the slides put into the base disc causing it to slide in two different positions.

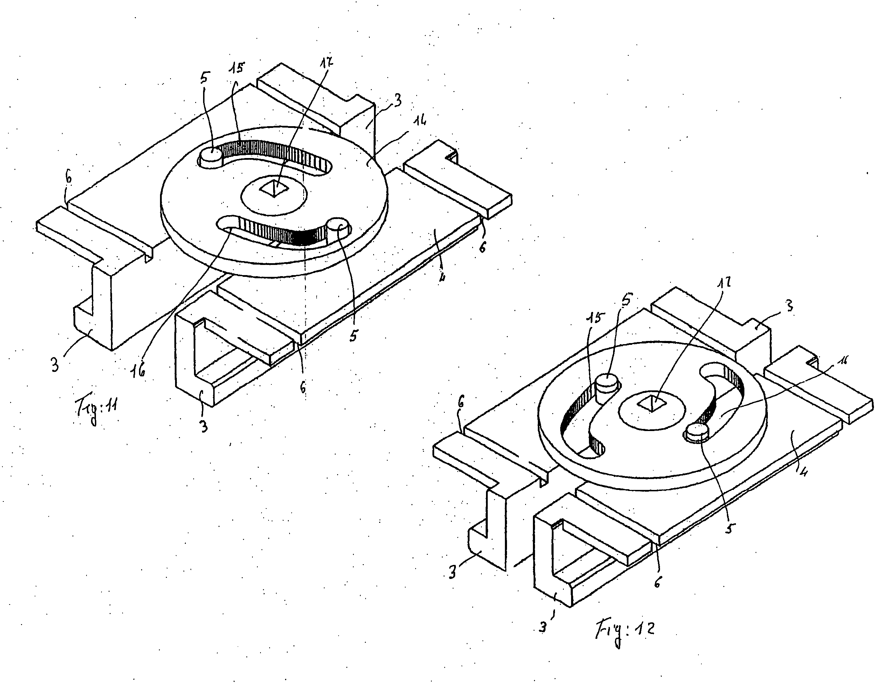

Figs. 11 and 12 of sheet 5/9 show perspective views of the slides in a capsized position to better show their movement.

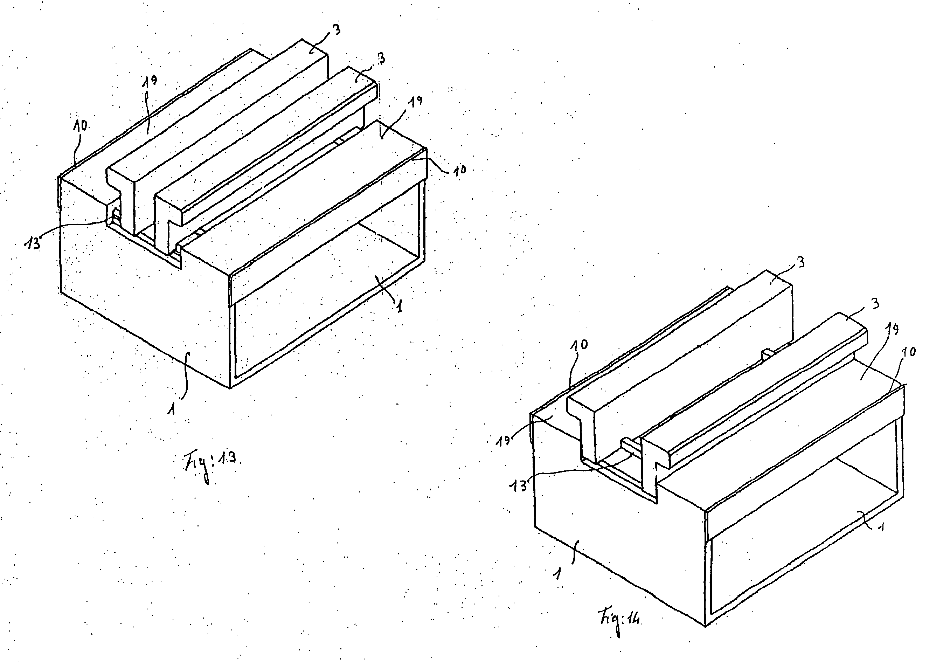

Figs. 13 and 14 of sheet 6/9 show the slides in a disengaged from and engaged with the board, respectively.

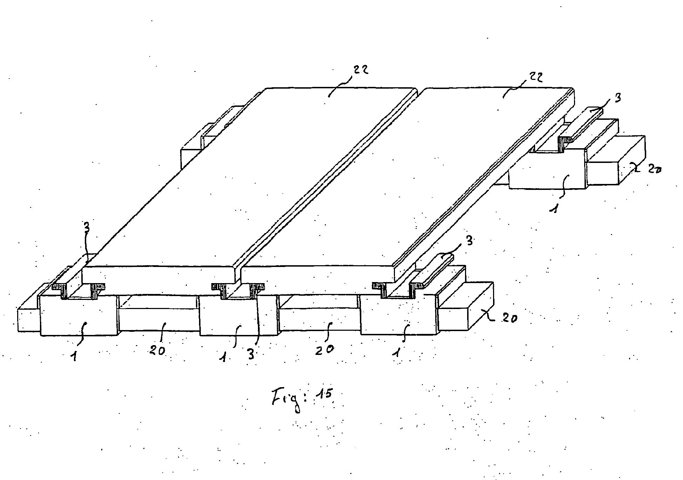

Fig. 15 of sheet 7/9 shows a perspective view of several juxtaposed boards with the slides being in the locked position of the boards.

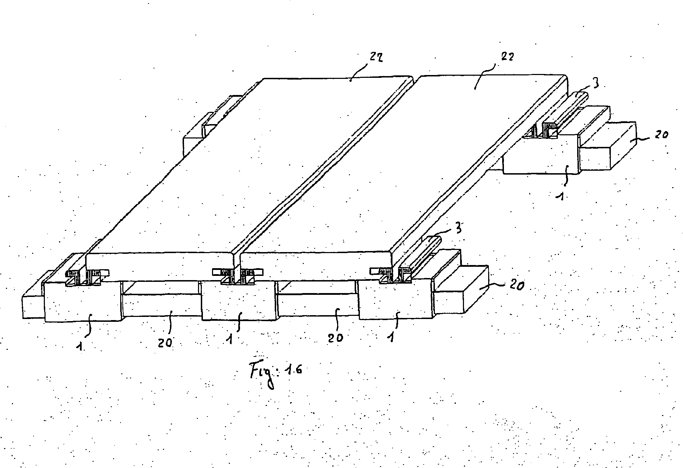

Fig. 16 of sheet 8/9 shows the same view as Fig. 15 but with the slides being in the released position of the boards.

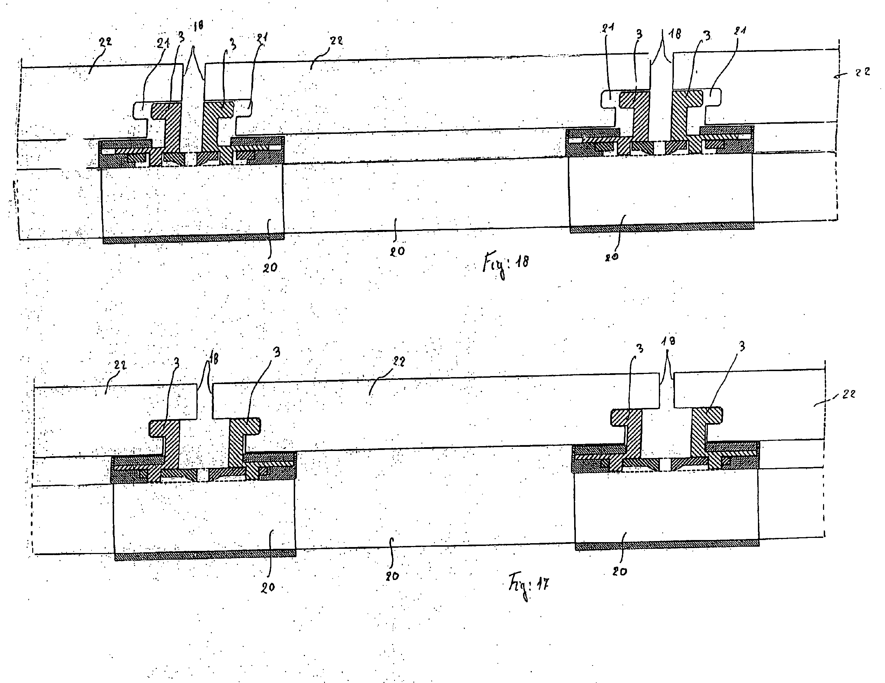

Figs. 17 and 18 of sheet 9/9 show section views of the boards in the locked and released positions, respectively.

According to the above, the system makes use of a block (1) consisting of a hollow parallelepiped member provided at its upper face with a central, wide opening (2) through which two slides (3) with a L-shaped section can be inserted. The longer side of the L-shaped slide has an orthogonal tab (4) having a boss (5) beneath and at the centre of its length and grooves (6) along its shorter sides.

The main portion of the support is a parallelepiped plate (7) having two side walls (8) provided at the upper end and internally with two female joints (9) that upon assembling engage male joints (10) at the upper edges of block (1).

Such plate has at its centre two concentric holes (11) and (12) having different diameters so that a shoulder is formed between the two holes. There are two rails (13) at the sides of the holes.

Another essential component of the support is a disc (14) which is provided with two elliptical slots (15) and (16) and a central hole (17).

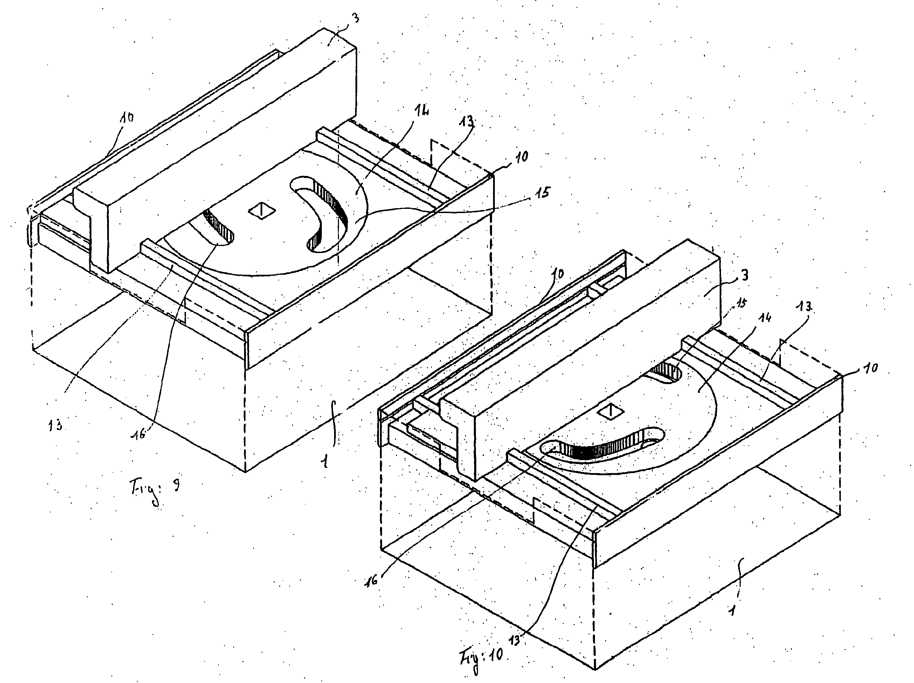

As can be seen, the support needs that the shorter sides (18) of the boards are shaped as shown in Fig. 9 to be disengaged or engaged. According to what disclosed above and shown in the figures, the support can be assembled by inserting the two slides (3) through upper opening (2) formed in block (1) one into the left side, the other into the right side of the opening.

The insertion should take place so that the lower portion (4) of the slide is positioned under upper walls (19) of block (1). Plate (7) with disc (14) placed on the shoulder formed between holes (11) and (12) of block (1) is then inserted and brought upwards so that boss (5) of slides (3) are inserted into elliptical slots (15) and (16) as well as rails (13) of the plate are inserted into channels (6) of slides (3). At last, female joints (9) of the walls of plate (8) are engaged with male joints (10) of parallelepiped block (1).

After the support is assembled, the slides are positioned at predetermined distances on wood profile (20) to be connected, as shown in sheets (7), (8) and (9). The two slides (3) are inserted with their channels (6) into rails (13) and guided to slide by a rectilinear length so as to approach or move apart from each other.

The travel of the slides is determined by the stroke of bosses (5) in slots (15) and (16). The latter have an extension that does not allow the two slides to approach each other but keeps the same spaced apart by a gap allowing the insertion of a wrench that reaches hole (17) to rotate the disc that moves slides (3) by means of bosses (5).

The support disclosed allows the boards of a wood floor to be blocked or released.

The floor is laid by placing the supports onto wood profiles at a suitable distance from one another and by laying boards (22) above them. To this end, the shorter sides (18) of the boards are shaped as shown in Fig. 9. Thus, slides (3) are moved by means of a wrench which is inserted into hole (17) in the gap between the two slides of each block, the lower tab of which is thus inserted into cavity (21) to lock the boards.

The boards are released from the slides by an opposite movement of the slide.

The system disclosed allows a wood floor to be laid easily and quickly without any hole into the boards and without using screws or nails.

It allows everybody to replace one or more boards easily and quickly. Moreover the background of the floor can be overseen at any site of the flooring in case of restoration of the waterproof sheath without damaging the boards of the floor. In fact, the system of the invention allows the board to be recovered and laid again.

Shape and structural modifications can be made to the invention within the scope of the same inventive concept which is defined by the following claims.

## Claims

1. A system for lying wood floors, comprising boards provided with a cavity formed at the end of the shorter side, the system further comprises suitable supports (1) on which the boards rest and are locked or released by the movement of two slides that are inserted in the said cavity of the boards, **characterized in that** the supports (1) consist of a parallelepiped block having two slides (3) with a L-shaped section which are able to slide by moving apart from each other and approaching, so that when they are apart from each other their shorter sides are inserted into a suitable cavity (21) formed in the shorter sides of the boards locking them, the movement of the slides being caused by a disc (14), provided with elliptical slots (15) and (16) engaged by bosses (5) set at the longer side of the slides (3).

2. A system according to the preceding claim, **characterized in that** the disc (4) is supported by a plate (7) which is inserted within the block in order to engage, with two opposite shaped surfaces with female section (9), the surfaces of the support with upper shape with male section (10).

3. A system according to the preceding claims, **characterized in that** suitable rails (13) of the plate guide the movement of the slides which are provided with corresponding grooves (6) placed on a tab which is orthogonal to the longer side of the plate.

4. A system according to the preceding claims, **characterized in that** the slides (3), in the opening and then released position of the boards, are spaced apart from each other by such a gap as to allow the insertion of a wrench that reaches the hole formed in the lower disc (14).

5. A system according to the preceding claims, **characterized in that** the floor is laid by spacing apart the blocks (1) at a suitable distance between centers, inserting them on wood profiles, then the shaped boards are laid onto the blocks and locked as disclosed in claim 1.

## Patentansprüche

1. System zum Verlegen Parkettböden, umfassend Tafeln mit einem am Ende der kürzeren Seite ausgebildeten Hohlraum, wobei das System ferner geeignete Träger (1) umfasst, auf denen die Tafeln unterstützt und durch die Bewegung von zwei Schiebern gesperrt oder freigegeben werden, die in den besagten Hohlraum der Tafeln eingelegt werden, **dadurch gekennzeichnet, daß** die Träger (1) aus einem Paralleliped-Block mit zwei Schiebern (3) mit einem L-förmigen Querschnitt bestehen, die in der Lage sind, sich voneinander weg und zueinander näher derart zu gleiten, daß ihre Schmalseiten in einen geeigneten Hohlraum (21) in den kürzeren Seiten der Tafeln eingelegt sind, der sie hält, wobei die Bewegung der Schieber von einer Scheibe (14) bewirkt wird, die mit elliptischen Schlitzen (15) und (16) versehen ist, die an der längeren Seite der Schieber angeordnet sind.

2. System nach dem vorhergehenden Anspruch, **dadurch gekennzeichnet, dass** die Scheibe (4) durch eine Platte (7) getragen wird, die innerhalb des Blocks eingefügt ist, um sich mit zwei gegenüberliegenden profilierten Oberflächen mit weiblichem Querschnitt (9) zu paaren, wobei es sich um die Oberflächen des Trägers mit oberen Gestalt und männlichem Querschnitt (10) handelt.

3. System nach dem vorhergehenden Anspruch, **dadurch gekennzeichnet, dass** geeignete Schienen (13) der Platte die Bewegung der Schieber führen, die entsprechende Nuten (6) aufweisen, die auf einer Klappe angeordnet sind, die senkrecht zur längeren Seite der Platte angeordnet ist.

4. System nach den vorhergehenden Ansprüchen, **dadurch gekennzeichnet, dass** die Schieber (3), in der offenen und dann gelösten Lage der Tafeln, voneinander durch einen Hohlraum beabstandet sind, um das Einführen eines Schraubenschlüssels zu gestatten, der das in der unteren Scheibe (14) ausgebildete Loch erreicht.

5. System nach den vorhergehenden Ansprüchen, **dadurch gekennzeichnet, dass** der Boden verlegt wird, indem die Blöcke (1) mit einem geeigneten Abstand zwischen den Zentren angeordnet sind, wobei sie auf Holzprofile eingefügt werden, und dann die Profiltafeln auf die Blöcke gelegt und befestigt werden, wie in Anspruch 1 beschrieben.

## Revendications

1. Système pour l'installation de planchers de bois, comprenant des panneaux munis d'une cavité formée à l'extrémité du côté le plus court, le système comprenant également des supports (1) appropriés sur lesquels les panneaux sont supportés et verrouillés ou libérés par le mouvement de deux curseurs qui sont insérés dans ladite cavité des panneaux, **caractérisé en ce que** les supports (1) sont formés par un bloc parallélépipédique avec deux curseurs (3) avec une section en forme de L qui sont aptes à coulisser loin et à se rapprocher l'un à l'autre, de sorte que quand ils sont séparés l'un de l'autre, leur côtés les plus courts sont insérés dans une cavité appropriée (21) formée dans le côtés les plus courts des panneaux qui les bloquent, le mouvement des curseurs étant causé par un disque (14) muni de fentes elliptiques (15) et (16) couplées avec des goujons (5) situés sur le côté le plus long des curseurs (3).

2. Système selon la revendication précédente, **caractérisé en ce que** le disque (4) est supporté par une plaque (7) qui est insérée dans le bloc pour s'accoupler avec deux surfaces opposées de forme avec une section femelle (9), et les surfaces du support avec une forme supérieure avec une section mâle (10).

3. Système selon les revendications précédentes, **caractérisé en ce que** des rails adaptés (13) de la plaque guident le mouvement des curseurs qui sont munis de rainures correspondantes (6) placées sur une languette qui est orthogonale au côté le plus long de la plaque.

4. Système selon les revendications précédentes, **caractérisé en ce que** les curseurs (3), dans la position ouverte et ensuite libérée des panneaux, sont séparés l'un de l'autre par un tel écart, de sorte qu'ils permettent d'insérer une clé qui atteint le trou formé dans le disque inférieur (14).

5. Système selon les revendications précédentes, **caractérisé en ce que** le plancher est posé en séparant les blocs (1) l'un de l'autre avec un écart approprié entre les centres et en les insérant sur des sections en bois, et ensuite les panneaux formés sont posés sur les blocs et bloqués tel que décrit dans la revendication 1.
